(19)

Europäisches Patentamt

European Patent Office

Office européen des brevets

(11) **EP 3 073 776 A1**

(12) **EUROPEAN PATENT APPLICATION**

(43) Date of publication:
28.09.2016 Bulletin 2016/39

(51) Int Cl.:
*H04W 16/22* (2009.01)    *H04W 24/10* (2009.01)

(21) Application number: **15305429.1**

(22) Date of filing: **24.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **Valentin, Stefan**
**92130 Issy les Moulineaux (FR)**
• **Qi, Liao**
**70378 Stuttgart (DE)**

(74) Representative: **Huber, Meik et al**
**Alcatel-Lucent Deutschland AG**
**Intellectual Property Business Group**
**Lorenzstraße 10**
**70435 Stuttgart (DE)**

(54) **METHOD AND APPARATUS FOR PREDICTING WIRELESS LINK STATES**

(57)    A method and apparatus for predicting a quality of a wireless link is proposed. A spatial domain is classified into subdomains. At least one local predictor is chosen for each subdomain. The wireless link quality for at least one subdomain is predicted by the at least one local predictor. The at least one local predictor uses side information derivable from street maps for predicting the wireless link quality for the at least one subdomain. The quality of the wireless link is predicted by combining the results of the at least one local predictors.

**Fig. 2**

EP 3 073 776 A1

## Description

FIELD OF THE INVENTION

The present invention relates to a method and apparatus for predicting a wireless link state.

BACKGROUND OF THE INVENTION

This section introduces aspects that may be helpful in facilitating a better understanding of the invention. Accordingly, the statements of this section are to be read in this light and are not to be understood as admission about what is in the prior art.

In wireless telecommunication networks, accurate prediction of the quality of a wireless link, i.e. data rate available for a user equipment, connection reliability, etc. is important to schedule network resources. Link quality prediction is important for network proactive optimization, link routing and scheduling services. Unexpected poor link quality may cause low data rates, and call drops. By using link quality information, the network may proactively reallocate the links to improve the resource efficiency, as well as to provide seamless robust service for better user experience.

Typical approaches for wireless link prediction apply numerical methods to analyse time series of channel state measurements. From the methodical perspective, auto-regression and autocorrelation methods dominate, but also supervised machine learning techniques such as Support Vector Machines (SVMs) are used often.

While the choice of the method implicitly selects the data and model, the link quality metric is often chosen separately depending on how the prediction will be applied. Different link quality metrics are summarized as follows.

There are two types of link quality metrics, namely physical indicators and logical indicators. Physical indicators are based on the signal strength, such as the received signal strength indication (RSSI), the link quality indication (LQI) and the signal-to-noise ratio (SNR). Logical indicators estimate the link quality by tracking the message loss, such as packet success rate (PSR) or expected transmission count (ETC).

These link metrics differ in the time scale, which highly affects the prediction complexity and accuracy. Some link quality metrics, such as RSSI, can vary in the order of one ms. This allows to capture radio propagation effects such as fast fading but allows to ignore the time-variance of path loss due to user mobility. Link metrics at larger time scale require including the effects of user mobility, such as an effect of varying path loss and deployment, but allow ignoring very fast effects such as fast fading.

State-of-the-art research proposes various types of the link predictors based on machine learning techniques such as time series, supervised learning and pattern matching. However, in the proposed approaches, a universal model is applied to the link quality prediction for all users with spatial dependent data. One single regression function for prediction is inferred for the whole covered area, using the measurements and the reports from all user equipments existing in the network. Such predictors suffer from the difficulty in fitting data by having abrupt local changes or non-stationary features.

SUMMARY OF THE INVENTION

It is an object of the invention to provide a method and an apparatus for predicting a quality of a wireless link in a cellular network.

According to one embodiment, a method for predicting a quality of a wireless link classifies a spatial domain into subdomains. Classifying the spatial domain into subdomains is performed on different levels. Edge level subdomains, route level subdomains, map level subdomains and cell level subdomains represent different areas of different extent. At least one local predictor is chosen for each subdomain. The local predictor is adapted to the given characteristics of a subdomain in order to provide an adequate prediction. The wireless link quality of at least one subdomain is predicted by at least one local predictor. The at least one local predictor uses side information for the prediction. Such side information is derivable from street maps. Side information is e.g. information where on the map a mobile user can move, e.g. on a street, bridge, trail through a park, etc. Further, side information indicates where a user cannot move, e.g. on a wall or building, on a river or the like. The quality of the wireless link is predicted by combining the results of the at least one predictors. Using side information for predicting the quality of the radio link in the subdomain reduces the prediction problem drastically. Many places where users are not located or located with low probability are excluded from the prediction process and link quality for such places is not determined.

In one embodiment, the at least one local predictor predicts the wireless link quality based on a radio map. The radio map shows a measure for channel quality of at least one serving cell depending on the location on the map. Thus a user equipment at this location derives the channel quality which it will experience from the radio map. In other words, location based channel quality is given in the radio map. A channel quality or as related parameter channel state or channel gain is expressed in different physical measures, e.g. path loss, interference, signal strength at the user, load at the base station or backlog in the transmit queue. Depending on the location, the user experiences different channel qualities due to the distance to the base station, obstacles within the transmit path which enhance path loss and interference and the like. This has the advantage that the user equipments derive information from radio and street maps to provide accurate predictions of the wireless link state. This way, the complexity that comes with radio measurements that include geographical position and time as well as information about the streets where those measurements were taken is mastered. Including this valuable "context" information at feasible complexity enables local predictors included in the given framework to profit from regularity in the spatial, temporal and user domain. The prediction of the wireless link state is a necessary fundamental function for anticipatory adaptation and is simplified significantly by including the information from street maps in the local predictors. A large number of new approaches in the field of anticipatory networking, such as anticipatory handover, anticipatory media streaming and anticipatory resource allocation benefit from the simplified and more accurate predication realizable with the above mentioned approach.

In one embodiment, the spatial domain is classified into subdomains on different hierarchical levels. Such hierarchical levels are at least one of an edge level subdomain, a route level subdomain, a map level subdomain and a cell level subdomain. Edge level means that the subdomain is defined by an edge between two nodes, which represents a small subdomain. Route level subdomain is defined according to a route or part of a route on which a user moves and is thus logically connected to the users movement. Cell level subdomain is defined by the serving area of a cell and is thus logically connected to the random access network. Map level subdomain is defined by the radio map providing the information and represents the overall area which is addressed by a specific radio map.

In one embodiment, the local predictor of an edge level subdomain predicts a wireless link along a street section based on measurement reports of user equipments passing the street section. In one embodiment, the measurement reports used for the prediction are measurement reports of the same user. In one embodiment, the measurement reports used for the prediction are measurement reports of one or more other users.

In one embodiment, the local predictor of a route level subdomain predicts a wireless link on a route based on measurement reports of user equipments passing through the same route. In one embodiment, the measurement reports used for the prediction are measurement reports of the same user. In one embodiment, the measurement reports used for the prediction are measurement reports of one or more other users.

In one embodiment, the local predictor of a cell level subdomain predicts a wireless link within a cell served by one base station based on measurement reports of user equipments served by the base station. In one embodiment, the measurement reports used for the prediction are measurement reports of the same user. In one embodiment, the measurement reports used for the prediction are measurement reports of one or more other users. The measurement reports for a subdomain may contain information of different locations within this subdomain. Especially in bigger subdomains like route level subdomain or cell level subdomain, multiple measurements in the area of the subdomain are available and are used by the local predictor.

In one embodiment, the local predictor uses historical link quality data for predicting the wireless link in the local predictors of corresponding subdomains. In one embodiment, the historical link quality data is from the same user. In one embodiment, the historical link quality data is from one or more other users.

In one embodiment, further side information is at least one of current user equipment position, current user equipment speed and direction of motion. In one embodiment, further side information is also additional street map information indicating future parts of a trajectory, e.g. at street crossings, one way roads, speed limits, etc.

In one embodiment, a step of adjusting the results of the at least one local predictor by historical prediction error data for the at least one local predictor is performed. In one embodiment, the adjusting step is performed for each local predictor which is used for the prediction. Historical error data comes from comparison of previous predictions and real time measurements performed for the prediction time and location. So thus say, the prediction error in the past for a certain location is incorporated in the prediction for the same or a neighboring location. In one embodiment, the prediction of the quality of the wireless link includes combining the adjusted results of the at least one local predictor.

In one embodiment, an apparatus for predicting the quality of a wireless link is proposed. The apparatus comprises at least one local predictor for predicting a wireless link in a subdomain. The at least one local predictor uses side information derivable from street maps for predicting the wireless link quality for the at least one subdomain. The apparatus further comprises a storage unit for storing and providing historical prediction error data for each local predictor. The apparatus further comprises a prediction unit for receiving the results from the at least one local predictor and historical prediction error data for the at least one local predictor. The prediction unit is for combining the received results and prediction error data and for providing a combined prediction result of the wireless link.

In one embodiment, the at least one local predictor predicts the wireless link quality based on a radio map. The radio map shows a measure for channel quality of at least one serving cell depending at a given location. This means, for a given location, the radio map shows the channel quality a user may expect if located at this given location at a certain time. A channel quality or, as related parameter, channel state or channel gain is expressed in different physical measures, e.g. path loss, interference, signal strength at the user, load at the base station or backlog in the transmit queue. Depending on the location, the user experiences different channel qualities due to the distance to the base station, obstacles within the transmit path which enhance path loss and interference and the like.

In one embodiment, the prediction unit is for adjusting each prediction value generated by a local predictor with the historical prediction error data and for generating a combined prediction result by averaging the adjusted prediction values.

In one embodiment, the prediction unit is for adjusting each prediction value with data available from side information.

Further advantageous features of the embodiments of the invention are defined and are described in the following detailed description.

BRIEF DESCRIPTION OF THE DRAWINGS

Some embodiments of apparatus and methods in accordance with embodiments of the present invention are now described, by way of examples only, and with reference to the accompanying drawings, in which:

Fig. 1 schematically depicts a radio map according to the invention

Fig. 2 schematically depicts a network graph generated from a street map according to the invention

Fig. 3 depicts a link quality prediction scheme according to the invention

DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

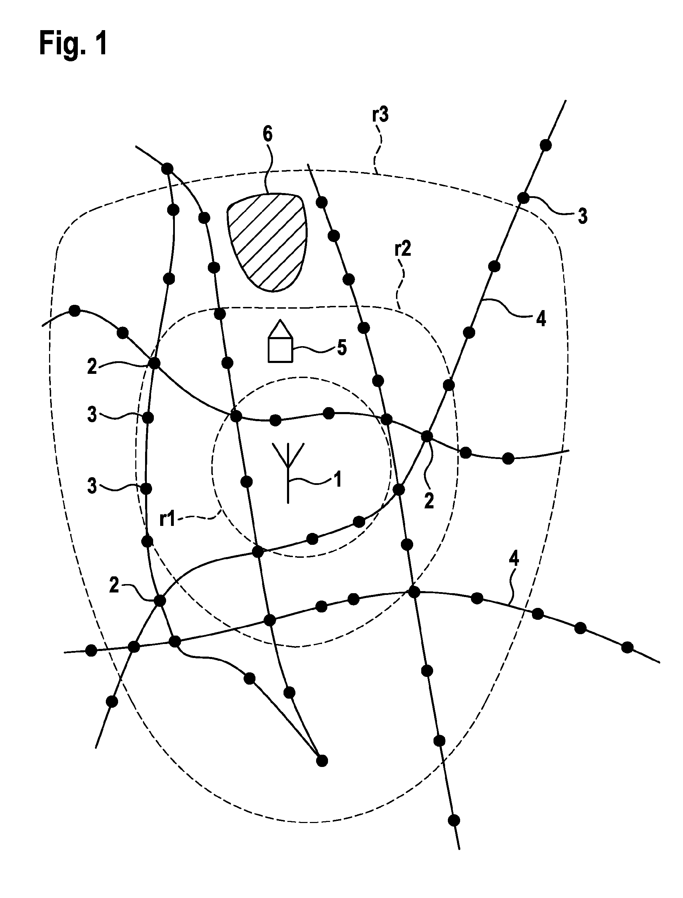

Fig. 1 discloses a radio map showing channel quality at different locations. A channel quality or as related parameter channel state or channel gain is expressed in different physical measures, e.g. path loss, interference, signal strength at the user, load at the base station or backlog in the transmit queue. Depending on the location, the user experiences different channel qualities due to the distance to the base station 1, obstacles within the transmit path which enhance path loss and interference and the like. A radio map may be extended by a street map showing streets 4, street crossings 2 and maybe buildings 5 and corresponding information like speed limits, one way streets, etc. In one embodiment, channel quality is shown over the whole radio map. In one embodiment, channel quality is shown mainly in the areas of streets 4 and street crossings 2 and areas where a mobile user might be, e.g. in a park or the like. In one embodiment, the link quality is described at certain specific locations 3 regularly distributed on a street 4. In Fig. 1, for illustrative purposes and to schematically indicate the radio map, a base station 1 is shown. Path loss rises with the distance to the base station 1, which is indicated by the circles r1, r2, r3 around the base station 1. The higher the distance to the base station 1, the lower the signal strength and the higher the path loss. Also other circumstances lead to higher path loss, like a building 5 or obstacle for example. In the area 6 behind a building, the signal strength and hence the channel quality is worse compared to other areas. Fig. 1 only depicts some indications how a radio map and the given information, e.g. channel quality at different locations is to be understood. It is understood by a person skilled in the art that a radio map according to the invention is a two dimensional street map, which indicates the channel quality distributed over the whole map. In one embodiment, the channel quality is given on a regular grid available and overlaid to the street map. In one embodiment, the channel quality is given on points useful for link quality prediction, e.g. on street crossings 2 and certain points 3 on a street 4. If the number of points 3 for giving the channel quality is increased, in the end, a channel quality distribution on a whole street 4 is available.

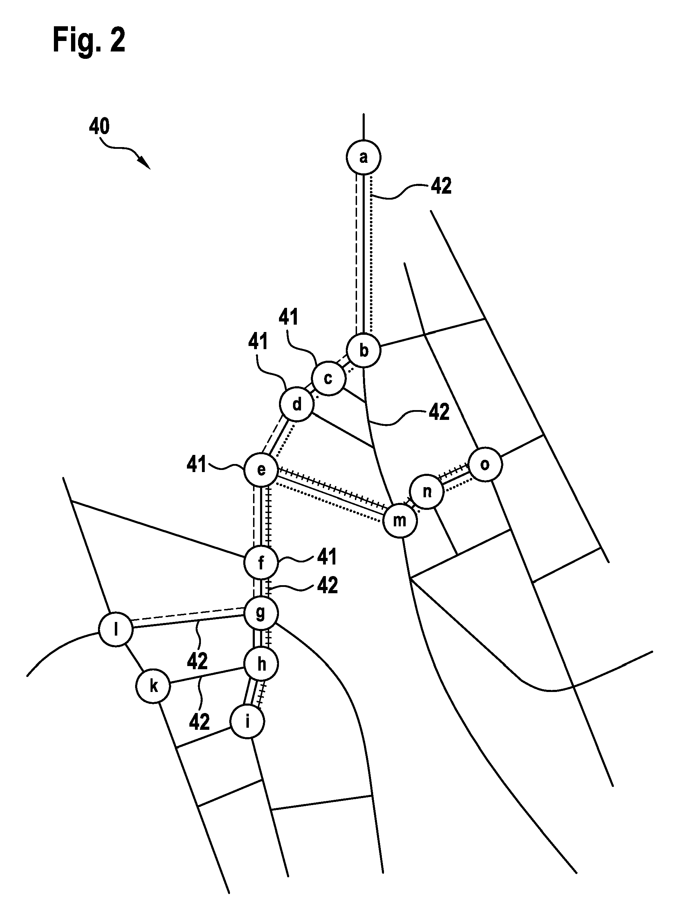

In order to predict a channel quality at a certain location by using information of a radio map, it is necessary to determine the future location of the user. If the user is not mobile, this is an easy task, as the user will in future be at its current location. If the user is mobile, especially with high mobility like a mobile user in a car, in one embodiment, the future user location is predicted, in order to use this information for predicting the future link quality. The street map is converted to a network graph 40 as given in Fig. 2 by a network graph generator. Street crossings are converted to nodes 41 of the network graph 40. Streets connecting the street crossings are converted to edges 42 of the network graph 40. In one embodiment, all street crossings and streets are converted into the network graph 40. In one embodiment, only major street crossings and corresponding streets are converted into the network graph 40. In one embodiment, the edges of the network graph 40 also reflect constraints given by traffic rules, i.e. one way streets etc. The network graph 40 comprises a finite set $S:=\{1,...,S\}$ of nodes 41 and a finite set $:=\{1,...,L\}$ of edges 42. Street maps are available in many shapes, sizes and scales. Small street maps are used for describing trajectories in dense urban area while the large scale highway maps are used for describing trajectories with higher speed in the less-dense suburban area. By generating the network graph 40, information of differently shaped street maps is systematically merged together in a network graph 40. An example of the converted network graph 40 from a subregion the street map is depicted in Fig. 2. Exemplarily, three user trajectories are indicated as dotted line, dashed line and crossed line. The first user trajectory (dotted line) passes the nodes 41 a, b, c, d, e, m, n and o. The second user trajectory (dashed line) passes the nodes 41 a, b, c, d, e, f, g and 1. The third user trajectory (crossed line) passes the nodes 41 o, n, m, e, f, g, h and i.

A prediction unit is used for predicting a movement of a mobile user 23 between multiple consecutive nodes 41. The predicted movement of a mobile user between multiple consecutive nodes 41 is used as a long-term trajectory prediction at large granularity. In addition, it is used as side information for predicting the short-term trajectory of a mobile user, i.e. the movement of a mobile user between two neighboring nodes 41, as described in more detail below. Such side information is, e.g. the probability of turning of a mobile user.

Historical data describing a route $R_k$ of at least one mobile user k in the past, i.e. individual node transition record, are collected from time $t_0$ up to time $t \geq t_0$. During the time period $[t_0, t]$, the mobile user 23 passes through $N > 0$ nodes

$$\{s_n^{(k)} \in S : n = 0, 1, ..., N\}.$$

The hitting time from one node 41 to the other may shift, but the distribution of the traveling time between the two nodes 41 usually remains stationary. The time-stamped sequence describing the route $\mathcal{R}_k := \{(s_n^{(k)}, t_n^{(k)}) : n = 0, 1, ..., N\}$ is expressed as a sequence associated with the traveling time periods,

$$\widetilde{\mathcal{R}}_k := \{\widetilde{\mathbf{r}}_n^{(k)} = (s_n^{(k)}, \tau_n^{(k)}) : n = 0, 1, ..., N-1\},$$

wherein $\tau_n^{(k)} := t_{n+1}^{(k)} - t_n^{(k)}$ denotes the time difference between the hitting time for the $n$-th node 41 and the hitting time for the $(n+1)$-th node 41.

In one embodiment, the prediction of movement of a mobile user between multiple consecutive nodes 41 (long-term trajectory prediction) is based on Markov Models such as data compression algorithms, e.g. including PPM and LZ78, or Hidden Markov Models. A conditional probability $P(\widetilde{\mathbf{r}}_{n+1}^{(k)} \mid \widetilde{\mathbf{r}}_0^{(k)}, ..., \widetilde{\mathbf{r}}_n^{(k)})$ is inferred from the Markov Models.

In one embodiment, the data compression algorithm, e.g. PPM or LZ78 is used to construct a suffix tree and $P(\widetilde{\mathbf{r}}_{n+1}^{(k)} \mid \widetilde{\mathbf{r}}_0^{(k)}, ..., \widetilde{\mathbf{r}}_n^{(k)})$ is approximated by

$$P(\widetilde{\mathbf{r}}_{n+1}^{(k)} \mid \widetilde{\mathbf{r}}_{n-N'}^{(k)}, ..., \widetilde{\mathbf{r}}_n^{(k)}).$$ $N'$ is the variable order of the Markov Model.

In one embodiment, the model complexity is decreased by using a semi-Markov Model. In this case, the traveling time $\tau_{n+1}^{(k)}$ depends only on the node $s_{n+1}^{(k)}$, while the node $s_{n+1}^{(k)}$ depends on the previous node states $(s_{n-N'}^{(k)}, ..., s_n^{(k)})$.

$P(s_{n+1}^{(k)} \mid s_{n-N'}^{(k)}, ..., s_n^{(k)})$ and $P(\tau_{n+1}^{(k)} \mid s_{n+1}^{(k)})$ are derived from the transition probability and the emission probability parameters. From that, the probability $P(\widetilde{\mathbf{r}}_{n+1}^{(k)} \mid \widetilde{\mathbf{r}}_0^{(k)}, ..., \widetilde{\mathbf{r}}_n^{(k)})$ is obtained.

With the above predicted long-term trajectory of a user, a radio map is used to look up the channel quality a user expects a certain predicted location at a certain time.

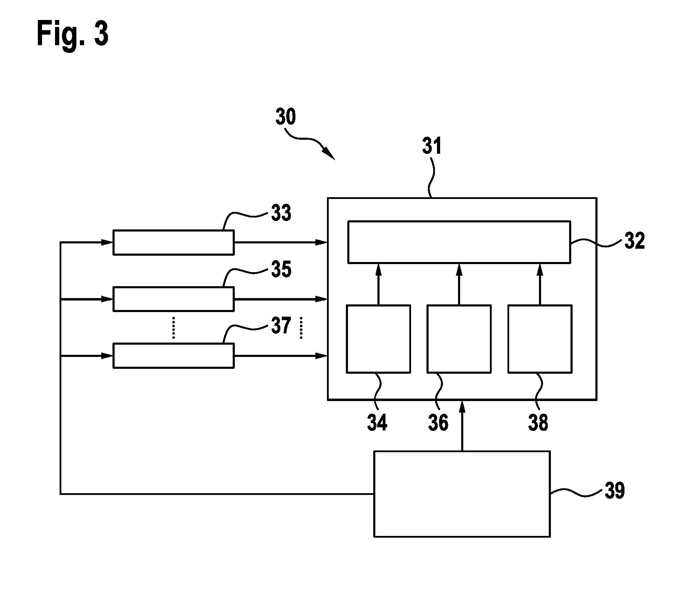

Fig. 3 discloses an overview of the prediction framework 30 for predicting a wireless channel quality. In principle, multiple predictions are performed simultaneously in N predictors 33, 35, 37. The predictors 33, 35, 37 provide the predicted values to a data processor 31. The data processor further comprises historical prediction errors 34, 36, 38 for each local predictor 33, 35, 37. The historical prediction errors 34, 36, 38 are received by the data processor 31 from a network 39. In one embodiment, the historical prediction errors 34, 36, 38 are stored in a look up table for different times for a local predictor 33, 35, 37. In one embodiment, the historical prediction errors 34, 36, 38 are expressed as a mathematic formula including the time of a day and/or the day of a week as a variable. The formula is generated by interpolating historical measurements. In fact, the historical prediction errors 34, 36, 38 represent the errors of the predictors in the past, not the predicted value itself. In the data processor 31, a prediction unit 32 adjusts the results of each local predictor 33, 35, 37 with the historical prediction errors 34, 36, 38. This approach allows including N models and data sets in the selection process and to decide a-posteriori with full knowledge, i.e. after the N local predictions have been performed by the local predictors 33, 35, 37.

A classification is made with regard to the subdomain of the local predictor 33, 35, 37. So to say, the spatial domain of the universal predictor is classified into different levels of subdomains and local predictors 33, 35, 37 are inferred for each subdomain. The following three levels of suddomains are defined.

In a cell-based local predictor 33, 35, 37, the spatial domain is classified into distinct finite areas served by different cells. A local predictor 33, 35, 37 is trained per cell using adaptively the measurements and the reports from the user equipments served by the cell. Such a classification allows each local predictor 33, 35, 37 to capture the cell-specific antenna propagation model and traffic load status distinctly.

In a route-based local predictor 33, 35, 37, the spatial domain is classified into distinct finite routes. User trajectories a, b, c, d, e, m, n, o and a, b, c, d, e, f, g, l and o, n, m, e, f, g, h, i in Fig. 2 are examples for such routes. A local predictor 33, 35, 37 is inferred by using adaptively the measurements and the reports from the user equipments passing through the same routes. This level of the classification takes into account the strongly correlated mobility pattern of different user equipments traveling along the same route. For example, the velocity does not differ much along a single route. As the link quality is highly mobility and localization-dependent, the route-based local predictor provides a detailed model for distinct mobility pattern. In one embodiment, the difference of the mobility patterns at different times of a day and days of a week is also taken into account. This is relevant e.g. to address different conditions in the rush hour.

In an edge-based local predictor, the spatial domain is classified into distinct edges between the road crossings. A road map is converted to a topological graph as described in Fig. 2, where the nodes are defined as the street crossings and the edges are defined as the connections between the nodes. It is intuitive that a group of user equipments experience similar link quality model while passing through the same edge. This results from the fact that the user equipments are constrained to a similar area of the map under the same traffic condition constrains such as velocity, yaw angle, and traffic light signal timing.

A distinct local predictor 33, 35, 37 is interred for each subdomain (cell, route, or edge) using the historical link quality data and a set of side information. Side information is information in which direction a user equipment may move according to the network graph given in Fig. 2, but also other information affecting the link quality and the users movement and probability of presence of a user equipment at a certain place. Each local predictor 33, 35, 37 may use different hyperparameters for the prediction model, or even a different model to adapt the non-stationary local changes. Such an approach is more computationally attractive for large spatial data.

Choosing proper local predictors 33, 35, 37 helps to improve the prediction accuracy and adaptability. However, the local predictors 33, 35, 37 cause discontinuities in prediction on the boundaries of subdomains. Introducing a two-tier structure as described below and using the transition prediction between multiple consecutive nodes as described with regard to Fig. 2 provides extra information for the prediction on the boundaries of subdomains. In urban dense areas where the boundaries of the subdomains are less obvious and the decomposition to the local predictor 33, 35, 37 may cause large error on the boundaries, a higher level predictor 33, 35, 37 like a cell-based predictor or a global predictor based on a whole map is chosen in addition or instead of the smaller area (edge-based) local predictors 33, 35, 37. In the less dense area where the user equipments strictly follow the road map and the movement pattern is more stationary, a lower level local predictor 33, 35, 37 is chosen such as a route-based or edge-based local predictor 33, 35, 37. According to one embodiment, an indirect prediction of the wireless link quality is performed. A user trajectory is predicted as described above. Using the prediction of the users location and a radio map, i.e. link quality map, the link quality is predicted. Thus, the indirect prediction is in fact transferred to a pure trajectory prediction problem, provided that a radio map, as schematically depicted in Fig. 1, is available. In one embodiment, the radio map is derived from test driving. This means, measurement equipment is driven along the streets given in a street map and derives measurement values in order to establish the radio map. In one embodiment, the radio map is updated continuously by measurements performed and reported by user equipments. A user trajectory is defined as a sequence of time-stamped locations $Z:=\{\mathbf{z}_i = (\mathbf{x}_i, t_i): i = 0,1,2,...\}$. If the location is defined in two-dimensional space, i.e. latitude and

longitude, $\mathbf{x}_i \in \Re^2$, $\forall$i. If an extra dimension of alti-

tude is considered $\mathbf{x}_i \in \Re^3$, $\forall$i. The long-term trajectory prediction as described above with regard to Fig. 2 provides the future location of the user equipment. The future location in large scale is implied by the next hitting nodes 41.

Further, this transition probability provides useful information a small-term trajectory prediction when the user equipment is about to cross the borders between two subdomains, e.g. edge-level subdomains and transit to the next node 41.

According to one embodiment, a small-term trajectory prediction is performed when the user equipment is about to cross the borders between two subdomains, e.g. edge-level subdomains and transit to the next node 41. So to say, the small-term trajectory prediction addresses the case in which the user traverses between two neighboring nodes 41. For example, small-term trajectory prediction is performed when either (i) no or only incomplete side information about the user's spatial constraints, e.g. a street map and the user's position is available or when (ii) a prediction based on the complete side information is too complex. When a user moves on a road map, but the prediction of the user's trajectory is either too complex or impossible with the provided information, stationary movement of the user between two arbitrary street nodes 41 is assumed.

Then, the following steps are performed:

- The street crossings are identified and interpreted as nodes 41 of a network graph 40.

- A confidence radius r is defined per node 41
- The current position of a user equipment is matched with the street map and the user equipment is assigned to the corresponding network node 41.

If the user equipment leaves the confidence radius r of the street crossing currently assigned to, a prediction is performed as illustrated in Fig. 3 when the user reaches the confidence radius of the neighboring node 41. So to say, the process as disclosed in Fig. 3 is only performed when the user reaches a node 41. When the user has left the confidence radius of a node, the predictor waits until the user has decided about the next stable phase of his trajectory and reaches the confidence radius r of the next node 41. Consequently, the trajectory does not have to be predicted. This highly decreases the complexity of the problem by several orders of magnitude. Instead of predicting the user's decision of a crossroad only it's movement time has to be predicted based on its velocity and bearing.

This is based on the following properties:

The trajectory between two nodes 41 is highly time correlated.

First, because if a user equipment is accelerating at time $t$, it is very likely that the user equipment will continue accelerating at time $t+\tau$ (time correlation).

Second, if different user equipments move along the same route or edge, they generally experience similar path loss and similar traffic condition, e.g. waiting time for traffic lights (Similarity among moving user equipments).

Given historical time-stamped localizations, estimated waiting time at the predicted neighboring node 41 and estimated transition probability of the neighboring node 41 (travelling/staying time) the above short-term trajectory prediction outputs a one-step-ahead forecast of trajectory and a N-step-ahead forecast of trajectory. The predicted trajectory is then provided to the given radio map and the predicted link quality is derived thereof.

According to one embodiment, a direct prediction of the wireless link quality is performed. The link quality prediction is a regression function based on:

- Historical link quality measurements of user equipments:

The link quality as a time-correlated time series contains significant useful information in the historical measurements of link quality for prediction.

- Historical localization measurements of user equipments:

The spatial-correlated property of the signal propagation encourages the utilization of the user equipments localization information.

- Geographical map: The user equipments movement, especially the speed and yaw angle, is constrained by the road topology. Therefore, the geographical map gives this powerful side information.
- Estimated long-term transition probability: The long-term trajectory prediction as described above provides side information when making the prediction for user equipments moving across the boundary between two subdomains. The discontinuity between two local predictors from neighboring subdomains is smoothened based on this information.

The local predictor 33, 35, 37 applying direct prediction of link quality provides a one-step-ahead forecasting of the link quality. For a short prediction time horizon, the local predictor 33, 35, 37 is able to provide accurate one-step-ahead link quality forecasting.

Further, the local predictor 33, 35, 37 provides a N-step-ahead forecasting of the link quality. For longer prediction time horizon the local predictor 33, 35, 37 provides the successive N predicted values of the link quality.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for predicting a quality of a wireless link, comprising the steps:

   - classifying a spatial domain into subdomains,
   - choosing at least one local predictor for each subdomain,
   - predicting the wireless link quality for at least one subdomain by the at least one local predictor, wherein the at least one local predictor uses side information derivable from street maps for predicting the wireless link quality for the at least one subdomain, and
   - predicting the quality of the wireless link by combining the results of the at least one local predictors.

**2.** Method for predicting a quality of a wireless link according to claim 1, wherein the at least one local predictor predicts the wireless link quality based on a radio map, the radio map showing a measure for channel quality of at least one serving cell depending on the location of a user equipment.

**3.** Method for predicting the quality of a wireless link according to claim 1 or 2, wherein classifying the spatial domain into subdomains is at least one of classifying the spatial domain in edge level subdomains, route level subdomains, map level subdomains and cell level subdomains.

**4.** Method for predicting the quality of a wireless link according to claim 3, wherein the local predictor of an edge level subdomain predicts a wireless link along a street section based on measurement reports of user equipments passing the street section.

**5.** Method for predicting the quality of a wireless link according to claim 3 or 4, wherein the local predictor of a route level subdomain predicts a wireless link on a route based on measurement reports of user equipments passing through the same route.

**6.** Method for predicting the quality of a wireless link according to one of claims 3 to 5, wherein the local predictor of a cell level subdomain predicts a wireless link within a cell served by one base station based on measurement reports of user equipments served by the base station.

**7.** Method for predicting the quality of a wireless link according to one of claims 1 to 6, wherein the local predictor uses historical link quality data for predicting the wireless link in their corresponding subdomain.

**8.** Method for predicting the quality of a wireless link according to one of claims 1 to 7, wherein further side information is at least one of current user equipment position, current user equipment speed and bearing.

**9.** Method for predicting the quality of a wireless link according one of claims 1 to 8, further comprising the steps of:

- adjusting the results of the at least one local predictor by historical prediction error data for the at least one local predictor, and
- predicting the quality of the wireless link by combining the adjusted results of the at least one local predictors.

**10.** Apparatus for predicting the quality of a wireless link, comprising:

- at least one local predictor for predicting a wireless link in a subdomain, wherein the at least one local predictor uses side information derivable from street maps for predicting the wireless link quality for the at least one subdomain,
- a storage unit for storing and providing historical prediction error data for each local predictor,
- a prediction unit for receiving the results from the at least one local predictor and historical prediction error data for the at least one local predictor, wherein the prediction unit is for combining the received results and prediction error data and for providing a combined prediction result of the wireless link.

**11.** Apparatus for predicting the quality of a wireless link according to claim 10, wherein the at least one local predictor predicts the wireless link quality based on a radio map, the radio map showing a measure for channel quality of at least one serving cell depending on the location.

**12.** Apparatus for predicting the quality of a wireless link according to claim 10 or 11, wherein the prediction unit is for adjusting each prediction value generated by a local predictor with the historical prediction error data and for generating a combined prediction result by averaging the adjusted prediction values.

**13.** Apparatus for predicting the quality of a wireless link according to one of claims 10 to 12, wherein the prediction unit is for adjusting each prediction value with data available from side information.

# Fig. 1

# Fig. 2

40

42

41

41

41

42

41

41

42

42

42

42

# Fig. 3

Europäisches
Patentamt

European
Patent Office

Office européen
des brevets

## EUROPEAN SEARCH REPORT

Application Number

EP 15 30 5429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | N. Barman, S. Valentin: "Wireless Link Quality Prediction Using Street and Coverage Maps", Proceedings of the 1st KuVS Workshop on Anticipatory Networks , 29 September 2014 (2014-09-29), pages 43-45, XP002744394, Stutgart, Germany Retrieved from the Internet: URL:http://www-old.cs.uni-paderborn.de/fileadmin/Informatik/AG-Karl/Events/1KuVSAnticipatory/proceedings.pdf [retrieved on 2015-09-11] | 1-6, 8-11,13 | INV. H04W16/22 H04W24/10 |
| Y | * the whole document * | 7,12 | |
| Y | US 2014/099967 A1 (EGNER WILL A [US] ET AL) 10 April 2014 (2014-04-10) | 7,12 | |
| A | * figures 9C, 10 * * paragraphs [0119] - [0121] * | 1-6, 8-11,13 | |
| A | US 2015/055608 A1 (EGNER WILL A [US] ET AL) 26 February 2015 (2015-02-26) * figures 8-13 * * paragraphs [0114] - [0142] * | 1-13 | TECHNICAL FIELDS SEARCHED (IPC) H04W |

The present search report has been drawn up for all claims

| Place of search | Date of completion of the search | Examiner |
|---|---|---|
| The Hague | 14 September 2015 | Marjanovic, Djordje |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5429

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2015

| Patent document cited in search report | Publication date | Patent family member(s) | Publication date |
|---|---|---|---|
| US 2014099967 A1 | 10-04-2014 | NONE | |
| US 2015055608 A1 | 26-02-2015 | NONE | |

EPO FORM P0459

For more details about this annex : see Official Journal of the European Patent Office, No. 12/82